(19) Europäisches Patentamt
European Patent Office
Office européen des brevets

(11) EP 3 868 829 A1

(12) EUROPEAN PATENT APPLICATION
published in accordance with Art. 153(4) EPC

(43) Date of publication:
25.08.2021 Bulletin 2021/34

(51) Int Cl.:
C08L 69/00 (2006.01)    C08L 23/06 (2006.01)
C08L 23/08 (2006.01)    C08L 33/02 (2006.01)
C08L 33/04 (2006.01)    C08L 31/04 (2006.01)
C08L 25/08 (2006.01)    C08L 53/02 (2006.01)

(21) Application number: 19885923.3

(22) Date of filing: 30.10.2019

(86) International application number:
PCT/CN2019/114376

(87) International publication number:
WO 2020/098496 (22.05.2020 Gazette 2020/21)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(30) Priority: 13.11.2018 CN 201811348967

(71) Applicant: Kingfa Sci. & Tech. Co., Ltd.
Guangzhou, Guangdong 510663 (CN)

(72) Inventors:
• YANG, Yan
Guangzhou, Guangdong 510663 (CN)
• LI, Mingkun
Guangzhou, Guangdong 510663 (CN)
• HUANG, Xianbo
Guangzhou, Guangdong 510663 (CN)
• YE, Nanbiao
Guangzhou, Guangdong 510663 (CN)
• TONG, Wei
Guangzhou, Guangdong 510663 (CN)
• DONG, Xiangmao
Guangzhou, Guangdong 510663 (CN)
• AI, Junwei
Guangzhou, Guangdong 510663 (CN)

(74) Representative: dompatent von Kreisler Selting Werner -
Partnerschaft von Patent- und Rechtsanwälten mbB
Deichmannhaus am Dom
Bahnhofsvorplatz 1
50667 Köln (DE)

(54) POLYETHYLENE/POLYCARBONATE ALLOY HAVING HIGH WELD BOND STRENGTH AND PREPARATION METHOD THEREFOR

(57) The present invention discloses a high weld line strength polyethylene/polycarbonate alloy, including the following components in parts by weight: 5 parts to 40 parts of a polyethylene; 40 parts to 85 parts of a polycarbonate; and 1 part to 15 parts of an ethylene copolymer compatibilizer. The high weld line strength polyethylene/polycarbonate alloy has the advantages of high weld line strength, a good melt index and a good thermal aging resistance.

EP 3 868 829 A1

**Description**

**TECHNICAL FIELD**

The present invention relates to the technical field of polymer materials, and more particularly, relates to a high weld line strength polyethylene/polycarbonate alloy and a preparation method thereof.

**BACKGROUND**

Polycarbonate (PC) is an engineering plastic with excellent performances, having an excellent mechanical property and an excellent dimensional stability, and a thermal stability, a weather resistance, a creep resistance, and a heat resistance are good. However, due to the presence of a rigid group in the PC molecular chain, a melt viscosity thereof is high, and in addition, its product has a poor chemical resistance.

By blending a polyolefin with the polycarbonate, a flowability of the polycarbonate can be improved, and thus processability can be improved, and a material having good processability can be obtained. However, due to its poor compatibility and low weld line strength, the alloy becomes a weak point, which can easily lead to fracture failure of a part.

**SUMMARY**

An objective of the present invention is to overcome the above technical defects, and to provide a high weld line strength polyethylene/polycarbonate alloy, having an excellent thermal aging resistance.

Another objective of the present invention is to provide a preparation method of the above-mentioned polyethylene/polycarbonate alloy.

The present invention is realized by the following technical solution.

A high weld line strength polyethylene/polycarbonate alloy includes the following components in parts by weight:

| | |
|---|---|
| a polyethylene | 5 parts to 40 parts; |
| a polycarbonate | 40 parts to 85 parts; and |
| an ethylene copolymer compatibilizer | 1 part to 15 parts. |

The polyethylene is selected from a polyethylene with a branching rate being 5 to 300 branched chains per 1000 carbon atoms, and the branched chain has 1 to 10 carbon atoms. Preferably, the polyethylene is selected from a polyethylene with a branching rate being 20 to 100 branched chains per 1000 carbon atoms, and the branched chain has 1 to 10 carbon atoms.

The ethylene copolymer compatibilizer is selected from at least one of an ethylene copolymer of acrylic acid, an ethylene-vinyl acetate copolymer, a styrene-butadiene-styrene copolymer, a styrene-ethylene-butadiene-styrene copolymer, and a styrene-ethylene-propylene-styrene copolymer. The ethylene copolymer of acrylic acid is selected from at least one of an ethylene-methacrylic acid copolymer, an ethylene-ethyl acrylate copolymer, and an ethylene-butyl acrylate copolymer. Preferably, the ethylene copolymer compatibilizer is selected from the ethylene copolymer of acrylic acid.

Preferably, the ethylene copolymer compatibilizer is selected from an ethylene copolymer compatibilizer containing a reactive active group, wherein the ethylene copolymer is selected from at least one of an ethylene copolymer of acrylic acid, an ethylene-vinyl acetate copolymer, a styrene-butadiene-styrene copolymer, a styrene-ethylene-butadiene-styrene copolymer, and a styrene-ethylene-propylene-styrene copolymer. The reactive active group is at least one of a maleic anhydride group and an epoxy group, and a grafting ratio of the reactive active group is 0.1% to 15%. The ethylene copolymer of acrylic acid is selected from at least one of an ethylene-methacrylic acid copolymer, an ethylene-ethyl acrylate copolymer, and an ethylene-butyl acrylate copolymer. Preferably, the ethylene copolymer is selected from the ethylene copolymer of acrylic acid.

The polycarbonate is selected from an aromatic polycarbonate, an aliphatic polycarbonate, and an aromatic-aliphatic polycarbonate. Preferably, the polycarbonate has a weight average molecular weight of 18,000 to 28,000.

In parts by weight, 0 part to 10 parts of a processing aid and/or an additive are further included.

Further, in the present invention, by a selection of melt indexes of the polyethylene and the ethylene copolymer compatibilizer, weld line strength of the present invention is further improved.

Further, in the present invention, by a selection of the polyethylene and the ethylene copolymer compatibilizer, the weld line strength of the present invention is further improved.

After melt mixing the polycarbonate and the polyethylene into an alloy, a phase structure with the polyethylene as a dispersed phase and the polycarbonate as a continuous phase is formed. The weld line strength is determined jointly by a particle size and an orientation of the dispersed phase at a weld line as well as a surface tension between the polycarbonate and the polyethylene. The smaller the particle size of the dispersed phase, the smaller the orientation, and the smaller the surface tension, the higher the weld line strength is. The particle size can be known from a formula that, when a melt index of the dispersed phase is large, $E_{DK}$ is small, which is easier to reduce the particle size of the dispersed phase; however, according to a diffusion theory of a polymer, the large melt index of the dispersed phase will lead to an increase of the orientation, and therefore, a selection of the melt index of the dispersed phase needs to selected to balance the particle size and the orientation, and only when the particle size is reduced to a maximum extent while maintaining the relatively small orientation, the high weld line strength can be obtained.

$$d \cong \frac{24P_r\gamma}{\pi\sigma_{12}}\left(\varphi + \frac{4P_rE_{DK}}{\pi\sigma_{12}}\varphi^2\right)$$

$\varphi$: a volume fraction of the dispersed phase; $P_r$: a probability of collision; $\gamma$: an interfacial bonding force; $\sigma_{12}$: a shear stress.

Futhermore, a general ethylene copolymer compatibilizer is a B-D type graft copolymer, wherein a B chain segment of an ethylene molecular chain segment is similar in structure to the polyethylene, and has an excellent compatibility with the polyethylene due to the similar compatibility; in addition, there is a chemical reaction between a D chain segment and an end group of the polycarbonate, and the D segment chain is combined with the polycarbonate through a chemical bond, so that a compatibility with the polycarbonate is correspondingly improved, that is to say, the compatibilizer is used as a bridging substance to connect the polyethylene and the polycarbonate, thereby improving a compatibility between the polyethylene and the polycarbonate, and thus reducing the surface tension. Therefore, after the ethylene copolymer compatibilizer is added to an alloy of the polyethylene and the polycarbonate, the particle size of the dispersed phase is thereby indirectly reduced. However, due to an increase in the compatibility, an interaction force between molecular chains is also increased, thereby reducing a melt index of the alloy system.

A melt index of the ethylene copolymer compatibilizer affects a degree and a rate of diffusion. When the melt index is too low, the ethylene copolymer compatibilizer diffuses slowly in a molten state, so that it cannot play a role of increasing the compatibility. When the melt index reaches a certain level, the ethylene copolymer compatibilizer easily diffuses to an interface between the dispersed phase and the continuous phase, and connects the dispersed phase and the continuous phase of the alloy, thereby increasing the interfacial bonding force, and through a stress transfer, reducing the particle size of the dispersed phase and improving the weld line strength of the alloy. However, when the melt index of the ethylene copolymer compatibilizer is too high, a degree of interpenetration of the ethylene copolymer compatibilizer between the dispersed phase and the continuous phase is instead reduced, and the weld line strength is instead reduced.

A number and a type of an active group of the ethylene copolymer compatibilizer affect reactivity with the polycarbonate, and the reactive active group increases a degree of reaction with the polycarbonate, and thus the weld line strength is improved and the melt index of the alloy is decreased due to an increase in a steric hindrance and an intermolecular force.

In summary, according to the present invention, by increasing the melt index of the polyethylene within a melt index range of 40g/10min to 150g/10min under a test condition of 230°C, 2.16kg, the particle size is reduced to a maximum extent while maintaining the relatively small orientation, and an ethylene copolymer compatibilizer is selected to indirectly reduce the particle size of the dispersed phase. Such, in the polyethylene/polycarbonate alloy of the present invention, the particle size of the dispersed phase is small and the orientation is also small, and as a result, the weld line strength of the polycarbonate alloy is improved.

The branched chain of the polyethylene affects an interface layer thickness of the polyethylene/polycarbonate alloy, while affecting the particle size and the orientation of the dispersed phase. When the branching rate is increased within a range of 20 to 100 branched chains per 1000 carbon atoms, flowability is good, and the dispersed phase is more easily broken into smaller particle sizes. Futhermore, an increase in the branching rate results in a higher interfacial force and an interfacial thickness of the polyethylene/polycarbonate alloy, and the orientation is reduced. Therefore, the increase in the branching rate of the polyethylene within this range ultimately results in an improvement of the weld line strength of the polyethylene/polycarbonate alloy. However, when the branching rate is within a range of 100 to 300 branched chains per 1000 carbon atoms, the polyethylene of a too high branching rate has a high steric hindrance and has no obvious effect on reduction of the particle size, and too many branched chains will increase the orientation of the dispersed phase, and the weld line strength is gradually decreased when the branching rate is within the range of 100 to 300 branched chains per 1000 carbon atoms.

The ethylene copolymer of acrylic acid has high melt strength, and polar group thereof has similar compatibility with polycarbonate, so that the weld line strength of the polycarbonate alloy can be significantly improved.

The high weld line strength polyethylene/polycarbonate alloy of the present invention has weld line strength of 65% or more, and a weld line strength test is according to ASTM D638 standard test. Preferably, the high weld line strength polyethylene/polycarbonate alloy has the weld line strength of 70% or more, and the weld line strength test is according to the ASTM D638 standard test.

A preparation method of the high weld line strength polyethylene/polycarbonate alloy includes the following steps: mixing the polycarbonate, the polyethylene, the ethylene copolymer compatibilizer, and the processing aid and/or the additive evenly according to a ratio in a high-speed mixer; then adding into a twin-screw extruder, melt mixing at a temperature of 220°C to 240°C, and then granulating, cooling and drying to obtain a high weld line strength polycarbonate alloy.

In order to obtain the high weld line strength polycarbonate alloy having the weld line strength of 70% or more, the polyolefin has the melt index of greater than 40g/10min to 150g/10min under the test condition of 230°C, 2.16kg. Preferably, the polyolefin has the melt index of greater than 60g/10min to 150g/10min under the test condition of 230°C, 2.16kg.

Further, the ethylene copolymer compatibilizer has a melt index of 0.2g/10min to 50g/10min under a test condition of 190°C, 2.16kg. Preferably, the ethylene copolymer compatibilizer has the melt index of greater than or equal to 0.4g/10min to 35g/10min under the test condition of 190°C, 2.16kg.

The present invention has the following beneficial effects.

According to the present invention, by adding the ethylene copolymer compatibilizer to a polyethylene/polycarbonate alloy, weld line strength and a TS retention rate of the alloy are improved. Further, the present invention discovers that the ethylene copolymer of acrylic acid greatly improves the weld line strength and the TS retention rate of the alloy. Further more, the branching rate and a branched chain length of the polyethylene have a greater impact on the weld line strength and the TS retention rate of the alloy. The present invention also optimizes the melt indexes of the polyethylene and the ethylene copolymer compatibilizer, and the weld line strength and the TS retention rate of the resulting alloy is further improved. The present invention also discovers that a weight average molecular weight of the polycarbonate also affects the weld line strength and the TS retention rate of the alloy, that is when the weight average molecular weight of the polycarbonate is 18,000 to 28,000, the alloy has better weld line strength and better TS retention rate. In summary, the high weld line strength polyethylene/polycarbonate alloy of the present invention has the advantages of high weld line strength, an excellent thermal aging resistance, and the like.

## DETAILED DESCRIPTION

The present invention will be further illustrated below by specific implementations, the following embodiments are preferred implementations of the invention, but the implementations of the present invention are not limited by the following embodiments.

Raw materials of Embodiments and Comparative Examples are commercially available, specifically:

polyethylene: a branching rate is the number of branched chains contained in 1,000 carbon atoms, and the branching rate in tables is the base number of 1,000 carbon atoms;
EMA: ethylene-methacrylic acid copolymer;
EEA: ethylene-ethyl acrylate copolymer;
EMA-g-GMA: ethylene-methacrylic acid graft epoxy group (GMA is an epoxy group);
EVA: ethylene-vinyl acetate copolymer;
SEBS: styrene-ethylene-butadiene-styrene copolymer;
compatibilizer B: PP-G-MAH (polyethylene graft maleic anhydride);
polycarbonate A: an aromatic polycarbonate with a weight average molecular weight being 28,000;
polycarbonate B: an aliphatic polycarbonate with a weight average molecular weight being 18,000;
polycarbonate C: an aromatic polycarbonate with a weight average molecular weight being 8,000;
polycarbonate D: an aromatic polycarbonate with a weight average molecular weight being 30,000;
anti-aging agent: anti-oxidant: anti-ultraviolet aging agent =1:1.

A preparation method of polyethylene/polycarbonate alloy in Embodiments and Comparative Examples: a polycarbonate, a polyethylene, a compatibilizer, and a processing aid and/or an additive were mixed evenly according to a ratio in a high-speed mixer; then added into a twin-screw extruder, melt mixed at a temperature of 220°C to 240°C, and then granulated, cooled and dried to obtain a high weld line strength polycarbonate alloy.

Each test method:

(1) Alloy Melt Index (MFR): according to a test ASTM D1238, a test condition of the polycarbonate alloy is 260°C, 2.16kg;
(2) Weld line strength: characterized by a weld line coefficient $F_{KL}$:

$$F_{KL} = TS_X/TS_0 \times 100\%$$

TSx is tensile strength of weld line and TSo is tensile strength without the weld line, and an ASTM D638 standard test is applied.

(3) TS retention rate: According to ISO 527-2/1A, for a test rod with a thickness of 4mm and a width of 10mm prepared by molding, at a test speed of 5mm/min, a tensile strength (TS) before and after aging in the air at 23°C (the average of test results of at least 5 samples with the same composition and shape) is tested, to obtain the tensile strength before the aging $T_{initial}$. Hot air aging is carried out using a thermal aging box, at a temperature adjusted to 150°C. After reaching aging time of 1000 hours, the sample is taken out of the aging box, and after cooling to room temperature, it is heat sealed with an aluminum foil bag to prevent absorption of any moisture before an evaluation of a mechanical property. At the test speed of 5mm/min, the tensile strength (TS) at 23°C is tested (the average of the test results of at least 5 samples with the same composition and shape), to obtain the tensile strength after the aging $T_{aging}$. Compared with the corresponding mechanical property before the aging, a retention rate of the tensile strength is calculated and expressed as a percentage, recorded as a TS retention rate after the aging R1. A calculation of R1 is as follows:

$$R1 = T_{aging}/T_{initial} \times 100\%$$

In the formula, $T_{aging}$ and $T_{initial}$ are the tensile strength after the aging and before the aging, respectively.

(4) Polyethylene branching rate: C-NMR (nuclear magnetic resonance spectroscopy) method, according to Galland method to test a degree of branching. A calculation formula of the degree of branching is (D+T)/(D+T+L).

$$\text{Degree of branching (DB)} = (D+T)/(D+T+L)$$

D represents the number of tree-like units. T represents the number of end units, and L represents the number of linear units.

Table 1: Ingredients and ratios (in parts by weight) and each performance test results of the polyethylene/polycarbonate alloy in Embodiments 1 to 10

| | | Embodiment 1 | Embodiment 2 | Embodiment 3 | Embodiment 4 | Embodiment 5 |
|---|---|---|---|---|---|---|
| Polyethylene | Branching rate | 20 | 20 | 20 | 20 | 20 |
| | Branched chain | Methyl group | Methyl group | Methyl group | Methyl group | Methyl group |
| | MFR, g/10min | 40 | 40 | 40 | 40 | 40 |
| | Amount, parts | 15 | 15 | 15 | 15 | 15 |
| Polycarbonate A, parts | | 80 | 80 | 80 | 80 | 80 |
| Compatibilizer | Species of | - | - | - | - | - |

| A | reactive active group | | | | | |
|---|---|---|---|---|---|---|
| | Grafting rate of reactive active group, % | - | - | - | - | - |
| | Ethylene copolymer | EMA | EMA | EMA | EMA | EMA |
| | MFR, g/10min | 0.2 | 0.4 | 5 | 10 | 15 |
| | Amount, parts | 5 | 5 | 5 | 5 | 5 |
| Anti-aging agent | | 0.5 | 0.5 | 0.5 | 0.5 | 0.5 |
| MFR, g/10min | | 8 | 8 | 10 | 12 | 15 |
| Weld line strength, % | | 70 | 75 | 79 | 83 | 87 |
| TS retention rate, % | | 86 | 88 | 90 | 92 | 93 |

Continued to Table 1:

| | | Embodiment 6 | Embodiment 7 | Embodiment 8 | Embodiment 9 | Embodiment 10 |
|---|---|---|---|---|---|---|
| Polyethylene | Branching rate | 20 | 20 | 20 | 20 | 20 |
| | Branched chain | Methyl group | Methyl group | Methyl group | Methyl group | Methyl group |
| | MFR, g/10min | 40 | 40 | 60 | 80 | 100 |
| | Amount, parts | 15 | 15 | 15 | 15 | 15 |
| Polycarbonate A, parts | | 80 | 80 | 80 | 80 | 80 |
| Compatibilizer | Species of | - | - | - | - | - |

| A | reactive active group | | | | | |
|---|---|---|---|---|---|---|
| | Grafting rate of reactive active group, % | - | - | - | - | - |
| | Ethylene copolymer | EMA | EMA | EMA | EMA | EMA |
| | MFR, g/10min | 35 | 50 | 5 | 5 | 5 |
| | Amount, parts | 5 | 5 | 5 | 5 | 5 |
| Anti-aging agent | | 0.5 | 0.5 | 0.5 | 0.5 | 0.5 |
| MFR, g/10min | | 20 | 25 | 12 | 14 | 17 |
| Weld line strength, % | | 89 | 73 | 84 | 86 | 87 |
| TS retention rate, % | | 96 | 86 | 92 | 93 | 95 |

Table 2: Ingredients and ratios (in parts by weight) and each performance test results of the polyethylene/polycarbonate alloy in Embodiments 11 to 20

| | | Embodiment 11 | Embodiment 12 | Embodiment 13 | Embodiment 14 | Embodiment 15 |
|---|---|---|---|---|---|---|
| Polyethylene | Branching rate | 20 | 20 | 20 | 20 | 20 |
| | Branched chain | Methyl group | Methyl group | Methyl group | Methyl group | Methyl group |
| | MFR, g/10min | 150 | 100 | 100 | 100 | 100 |
| | Amount, parts | 15 | 15 | 15 | 15 | 15 |
| Polycarbonate A, parts | | 80 | 80 | 80 | 80 | 80 |

| | | | | | | |
|---|---|---|---|---|---|---|
| Polycarbonate B, parts | | - | - | - | - | - |
| Polycarbonate C, parts | | - | - | - | - | - |
| Polycarbonate D, parts | | - | - | - | - | - |
| Compatibilizer A | Species of reactive active group | - | GMA | GMA | GMA | - |
| | Grafting rate of reactive active group, % | - | 0.1 | 5 | 15 | - |
| | Ethylene copolymer | EMA | EMA | EMA | EMA | EEA |
| | MFR, g/10min | 5 | 5 | 5 | 5 | 0.2 |
| | Amount, parts | 5 | 5 | 5 | 5 | 5 |
| Anti-aging agent | | 0.5 | 0.5 | 0.5 | 0.5 | 0.5 |
| MFR, g/10min | | 20 | 13 | 10 | 8 | 9 |
| Weld line strength, % | | 89 | 90 | 91 | 93 | 71 |
| TS retention rate, % | | 97 | 95 | 98 | 98 | 88 |

Continued to Table 2:

| | | Embodiment 16 | Embodiment 17 | Embodiment 18 | Embodiment 19 | Embodiment 20 |
|---|---|---|---|---|---|---|
| Polyethylene | Branching rate | 20 | 20 | 20 | 20 | 20 |
| | Branched chain | Methyl group | Methyl group | Methyl group | Methyl group | Methyl group |
| | MFR, g/10min | 40 | 40 | 100 | 100 | 100 |

| | Amount, parts | 15 | 15 | 15 | 15 | 15 |
|---|---|---|---|---|---|---|
| Polycarbonate A, parts | | 80 | 80 | - | - | - |
| Polycarbonate B, parts | | - | - | 80 | - | - |
| Polycarbonate C, parts | | - | - | - | 80 | - |
| Polycarbonate D, parts | | - | - | - | - | 80 |
| Compatibilizer A | Species of reactive active group | - | - | - | - | - |
| | Grafting rate of reactive active group, % | - | - | - | - | - |
| | Ethylene copolymer | EVA | SEBS | EMA | EMA | EMA |
| | MFR, g/10min | 0.2 | 0.2 | 5 | 5 | 5 |
| | Amount, parts | 5 | 5 | 5 | 5 | 5 |
| Anti-aging agent | | 0.5 | 0.5 | 0.5 | 0.5 | 0.5 |
| MFR, g/10min | | 8 | 8 | 21 | 23 | 14 |
| Weld line strength, % | | 66 | 65 | 88 | 73 | 68 |
| TS retention rate, % | | 85 | 84 | 95 | 87 | 85 |

Table 3: Ingredients and ratios (in parts by weight) and each performance test results of the polyethylene/polycarbonate alloy in Embodiments 21 to 26 and Comparative Examples

| | | Embodiment 21 | Embodiment 22 | Embodiment 23 | Embodiment 24 | Embodiment 25 | Embodiment 26 |
|---|---|---|---|---|---|---|---|
| Polyethylene | Branching rate | 20 | 20 | 25 | 90 | 210 | 20 |

| | | | | | | | |
|---|---|---|---|---|---|---|---|
| | Branched chain | Methyl group | Methyl group | Methyl group | Methyl group | Methyl group | Methyl group and butyl group |
| | MFR, g/10min | 100 | 100 | 100 | 100 | 100 | 100 |
| | Amount, parts | 15 | 15 | 15 | 15 | 15 | 15 |
| Polycarbonate A, parts | | 80 | 80 | 80 | 80 | 80 | 80 |
| Compatibilizer A | Species of reactive active group | - | - | - | - | - | - |
| | Grafting rate of reactive active group, % | - | - | - | - | - | - |
| | Ethylene copolymer | EMA | EMA | EMA | EMA | EMA | EMA |
| | MFR, g/10min | 5 | 5 | 5 | 5 | 5 | 5 |
| | Amount, parts | 1 | 15 | 5 | 5 | 5 | 5 |
| Amount of compatibilizer B, parts | | - | - | - | - | - | - |
| Anti-aging agent | | 0.5 | 0.5 | 0.5 | 0.5 | 0.5 | 0.5 |
| MFR, g/10min | | 12 | 20 | 18 | 20 | 13 | 15 |
| Weld line strength, % | | 79 | 92 | 88 | 90 | 82 | 86 |
| TS retention rate, % | | 88 | 98 | 95 | 97 | 91 | 94 |

Continued to Table 3:

| | | Comparative Example 1 | Comparative Example 2 | Comparative Example 3 | Comparative Example 4 |
|---|---|---|---|---|---|
| Polyethylene | Branching rate | 20 | 20 | 20 | 20 |
| | Branched chain | Methyl group | Methyl group | Methyl group | Methyl group |
| | MFR, g/10min | 100 | 100 | 30 | 100 |
| | Amount, parts | 15 | 15 | 15 | 15 |
| Polycarbonate A, parts | | 80 | 80 | 80 | 80 |
| Compatibilizer A | Species of reactive active group | - | - | - | - |
| | Grafting rate of reactive active group, % | - | - | - | - |
| | Ethylene copolymer | - | - | EMA | EMA |
| | MFR, g/10min | - | - | 5 | 60 |
| | Amount, parts | - | - | 5 | 5 |
| Amount of compatibilizer B, parts | | - | 5 | - | - |
| Anti-aging agent | | 0.5 | 0.5 | 0.5 | 0.5 |
| MFR, g/10min | | 10 | 15 | 6 | 28 |
| Weld line strength, % | | 30 | 28 | 46 | 52 |
| TS retention rate, % | | 53 | 50 | 67 | 70 |

It can be seen from Embodiments 1 to 7 and Comparative Example 4 that as an increase of the melt index of the ethylene copolymer compatibilizer, the melt index of the product increases and the weld line strength is in an inverted U-shape. When the melt index of the ethylene copolymer compatibilizer is 0.4g/10min to 35g/10min (under a test condition of 190°C, 2.16kg), the weld line strength of the product is relatively high. When the melt index of the ethylene copolymer compatibilizer is 60g/10min (under the test condition of 190°C, 2.16kg), the weld line strength and the TS retention rate of the product are greatly reduced.

It can be seen from Embodiments 3, 8 to 11 that as an increase of the melt index of the polyethylene, the weld line strength, the melt index, and the TS retention rate of the product are increased.

It can be seen from Embodiment 3 and Embodiments 12 to 14 that the ethylene copolymer compatibilizer containing reactive active groups is capable of increasing the weld line strength and the TS retention rate compared with the ethylene copolymer compatibilizer containing no reactive active groups, and as an increase of a content of the reactive active groups, the weld line strength and the TS retention rate of the product are increased.

It can be seen from Embodiments 10, 23 to 26 that in the Embodiments where the polyethylene has the branching rate of 20 to 100 branched chains per 1000 carbon atoms, the weld line strength and the TS retention rate are relatively high.

It can be seen from Embodiment 8 and Comparative Example 3 that when the melt index of the polyethylene is less than 40g/10min (under the test condition of 230°C, 2.16kg), the weld line strength of the product is considerably decreased and the melt index is relatively low.

It can be seen from Embodiment 1, 15, 16, 17 that when the ethylene copolymer of acrylic acid is as a compatibilizer, each performance of the product is relatively good.

**Claims**

1. A high weld line strength polyethylene/polycarbonate alloy, comprising the following components in parts by weight:

   | | |
   |---|---|
   | a polyethylene | 5 parts to 40 parts; |
   | a polycarbonate | 40 parts to 85 parts; and |
   | an ethylene copolymer compatibilizer | 1 part to 15 parts. |

2. The high weld line strength polyethylene/polycarbonate alloy according to claim 1, wherein the polyethylene is selected from a polyethylene with a branching rate being 5 to 300 branched chains per 1000 carbon atoms, and the branched chain has 1 to 10 carbon atoms; and preferably, the polyethylene is selected from a polyethylene with a branching rate being 20 to 100 branched chains per 1000 carbon atoms, and the branched chain has 1 to 10 carbon atoms.

3. The high weld line strength polycarbonate alloy according to claim 1, wherein the ethylene copolymer compatibilizer is selected from at least one of an ethylene copolymer of acrylic acid, an ethylene-vinyl acetate copolymer, a styrene-butadiene-styrene copolymer, a styrene-ethylene-butadiene-styrene copolymer, and a styrene-ethylene-propylene-styrene copolymer; and the ethylene copolymer of acrylic acid is selected from at least one of an ethylene-methacrylic acid copolymer, an ethylene-ethyl acrylate copolymer, and an ethylene-butyl acrylate copolymer.

4. The high weld line strength polycarbonate alloy according to claim 3, wherein the ethylene copolymer compatibilizer is selected from the ethylene copolymer of acrylic acid.

5. The high weld line strength polycarbonate alloy according to claim 1, wherein the ethylene copolymer compatibilizer is selected from an ethylene copolymer compatibilizer containing a reactive active group, wherein the ethylene copolymer is selected from at least one of an ethylene copolymer of acrylic acid, an ethylene-vinyl acetate copolymer, a styrene-butadiene-styrene copolymer, a styrene-ethylene-butadiene-styrene copolymer, and a styrene-ethylene-propylene-styrene copolymer, the reactive active group is at least one of a maleic anhydride group and an epoxy group, and a grafting ratio of the reactive active group is 0.1% to 15%; the ethylene copolymer of acrylic acid is selected from at least one of an ethylene-methacrylic acid copolymer, an ethylene-ethyl acrylate copolymer, and an ethylene-butyl acrylate copolymer.

6. The high weld line strength polycarbonate alloy according to claim 5, wherein the ethylene copolymer is selected from the ethylene copolymer of acrylic acid.

**7.** The high weld line strength polyethylene/polycarbonate alloy according to claim 1, wherein the polycarbonate is selected from an aromatic polycarbonate, an aliphatic polycarbonate, and an aromatic-aliphatic polycarbonate; the polycarbonate has a weight average molecular weight of 18,000 to 28,000; and in parts by weight, 0 part to 10 parts of a processing aid and/or an additive are further comprised.

**8.** The high weld line strength polyethylene/polycarbonate alloy according to any one of claims 1 to 7, wherein the high weld line strength polyethylene/polycarbonate alloy has weld line strength of 65% or more, and a weld line strength test is according to ASTM D638 standard test; and preferably, the high weld line strength polyethylene/polycarbonate alloy has the weld line strength of 70% or more, and the weld line strength test is according to ASTM D638 standard test.

**9.** A preparation method of the high weld line strength polyethylene/polycarbonate alloy of claim 7, comprising the following steps: mixing the polycarbonate, polyethylene, the ethylene copolymer compatibilizer, and a processing aid and/or an additive evenly according to a ratio in a high-speed mixer; then adding into a twin-screw extruder, melt mixing at a temperature of 220°C to 240°C, and then granulating, cooling and drying to obtain the high weld line strength polycarbonate alloy.

**10.** The preparation method of the high weld line strength polycarbonate alloy according to claim 9, wherein the polyolefin has a melt index of greater than 40g/10min to 150g/10min under a test condition of 230°C, 2.16kg; preferably, the polyolefin has the melt index of greater than 60g/10min to 150g/10min under the test condition of 230°C, 2.16kg; and the ethylene copolymer compatibilizer has a melt index of 0.2g/10min to 50g/10min under a test condition of 190°C, 2.16kg; and preferably, the ethylene copolymer compatibilizer has the melt index of greater than or equal to 0.4g/10min to 35g/10min under the test condition of 190°C, 2.16kg.

## INTERNATIONAL SEARCH REPORT

| International application No. |
| --- |
| **PCT/CN2019/114376** |

**A.    CLASSIFICATION OF SUBJECT MATTER**

C08L 69/00(2006.01)i;  C08L 23/06(2006.01)i;  C08L 23/08(2006.01)i;  C08L 33/02(2006.01)i;  C08L 33/04(2006.01)i;  C08L 31/04(2006.01)i;  C08L 25/08(2006.01)i;  C08L 53/02(2006.01)i

According to International Patent Classification (IPC) or to both national classification and IPC

**B.    FIELDS SEARCHED**

Minimum documentation searched (classification system followed by classification symbols)

C08L

Documentation searched other than minimum documentation to the extent that such documents are included in the fields searched

Electronic data base consulted during the international search (name of data base and, where practicable, search terms used)

CJFD; DWPI; SIPOABS; CNABS; CNTXT: 熔接线, 熔接, 熔合, 汇流, 丙烯酸, 丙烯酸乙酯, 丙烯酸丁酯, 乙酸乙烯, 醋酸乙烯, 相容, weld, melt, fusion, line, bond, wire, strength, compatible, consistent

**C.    DOCUMENTS CONSIDERED TO BE RELEVANT**

| Category* | Citation of document, with indication, where appropriate, of the relevant passages | Relevant to claim No. |
| --- | --- | --- |
| PX | CN 109535682 A (KINGFA SCIENTIFIC AND TECHNOLOGICAL CO., LTD.) 29 March 2019 (2019-03-29)<br>claims 1-10 | 1-10 |
| X | CN 104788926 A (SK INNOVATION CO., LTD.) 22 July 2015 (2015-07-22)<br>embodiment 4, and description, paragraphs 71-72 | 1-10 |
| X | 赵印等 (ZHAO, Yin et al.). "聚碳酸酯与聚乙烯的增容研究进展 (Review on the Compatibilization Techniques of PE/PC Blends)"<br>工程塑料应用 (Engineering Plastics Application),<br>Vol. 34, No. (03), 10 April 2006 (2006-04-10),<br>pages 63-64, "2.2 Other Copolymers" | 1-10 |
| X | CN 107868425 A (HANGZHOU NORMAL UNIVERSITY et al.) 03 April 2018 (2018-04-03)<br>embodiment 2 | 1-10 |
| X | CN 108047532 A (WUJIANG QIANGSU VALVE FITTINGS FACTORY) 18 May 2018 (2018-05-18)<br>description, paragraphs 4-19 | 1-10 |

☑ Further documents are listed in the continuation of Box C.       ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **30 December 2019** | **08 January 2020** |

| Name and mailing address of the ISA/CN | Authorized officer |
| --- | --- |
| **China National Intellectual Property Administration**<br>**No. 6, Xitucheng Road, Jimenqiao Haidian District, Beijing**<br>**100088**<br>**China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2019/114376** |

**C.  DOCUMENTS CONSIDERED TO BE RELEVANT**

| Category* | Citation of document, with indication, where appropriate, of the relevant passages | Relevant to claim No. |
| --- | --- | --- |
| X | CN 106674961 A (SHANGHAI KUMHO SUNNY PLASTICS CO., LTD.) 17 May 2017 (2017-05-17)<br>  description, paragraphs 9-22 | 1-10 |
| X | CN 106554610 A (SICHUAN JINTAIJIA ENVIRONMENTAL PROTECTION BUILDING MATERIAL CO., LTD.) 05 April 2017 (2017-04-05)<br>  description, paragraphs 9-19 | |
| A | US 4522980 A (GENERAL ELECTRIC COMPANY) 11 June 1985 (1985-06-11)<br>  entire document | 1-10 |
| A | US 4563502 A (GENERAL ELECTRIC COMPANY) 07 January 1986 (1986-01-07)<br>  entire document | 1-10 |
| A | CN 106467651 A (SHANGHAI ZHONGLEI NEW MATERIAL SCIENCE CO., LTD.) 01 March 2017 (2017-03-01)<br>  entire document | 1-10 |
| A | CN 107903604 A (TIANJIN KINGFA NEW MATERIAL CO., LTD.) 13 April 2018 (2018-04-13)<br>  entire document | 1-10 |

Form PCT/ISA/210 (second sheet) (January 2015)

INTERNATIONAL SEARCH REPORT
Information on patent family members

International application No.

PCT/CN2019/114376

| Patent document cited in search report | | | Publication date (day/month/year) | Patent family member(s) | | | Publication date (day/month/year) |
|---|---|---|---|---|---|---|---|
| CN | 109535682 | A | 29 March 2019 | None | | | |
| CN | 104788926 | A | 22 July 2015 | US | 9346951 | B2 | 24 May 2016 |
| | | | | US | 2015203681 | A1 | 23 July 2015 |
| | | | | KR | 20150087084 | A | 29 July 2015 |
| CN | 107868425 | A | 03 April 2018 | None | | | |
| CN | 108047532 | A | 18 May 2018 | None | | | |
| CN | 106674961 | A | 17 May 2017 | None | | | |
| CN | 106554610 | A | 05 April 2017 | None | | | |
| US | 4522980 | A | 11 June 1985 | JP | S59140254 | A | 11 August 1984 |
| | | | | JP | H0526825 | B2 | 19 April 1993 |
| | | | | DE | 3373104 | D1 | 24 September 1987 |
| | | | | BR | 8307290 | A | 14 August 1984 |
| | | | | CA | 1201241 | A | 25 February 1986 |
| | | | | EP | 0119311 | A1 | 26 September 1984 |
| | | | | AU | 575790 | B2 | 11 August 1988 |
| | | | | AU | 2157583 | A | 05 July 1984 |
| | | | | EP | 0119311 | B1 | 19 August 1987 |
| US | 4563502 | A | 07 January 1986 | EP | 0109449 | A1 | 30 May 1984 |
| | | | | JP | S59501631 | A | 13 September 1984 |
| | | | | DE | 3275557 | D1 | 09 April 1987 |
| | | | | JP | H0326710 | B2 | 11 April 1991 |
| | | | | WO | 1984001164 | | 29 March 1984 |
| | | | | EP | 0109449 | B1 | 04 March 1987 |
| | | | | US | 4666985 | A | 19 May 1987 |
| CN | 106467651 | A | 01 March 2017 | None | | | |
| CN | 107903604 | A | 13 April 2018 | None | | | |

Form PCT/ISA/210 (patent family annex) (January 2015)